# EUROPÄISCHE PATENTSCHRIFT

(11) **EP 3 973 127 B1**
(45) Veröffentlichungstag und Bekanntmachung des Hinweises auf die Patenterteilung: **24.07.2024**
(21) Anmeldenummer: 20726020.9
(22) Anmeldetag: 09.05.2020
(51) Int. Cl.: H02K 41/03, E05B 81/90, E05D 15/06, E05F 15/60

(54) **FAHRZEUG MIT AN EINER AUSSENWAND ANGEORDNETER AUSSENTÜRVORRICHTUNG**
VEHICLE HAVING AN EXTERNAL DOOR APPARATUS ARRANGED ON AN EXTERNAL WALL
VEHICULE DOTE D'UN SYSTEME DE PORTE EXTERIEURE AGENCE SUR UNE PAROI EXTERIEURE

(30) Priorität: 22.05.2019 DE 102019003566
(43) Veröffentlichungstag der Anmeldung: 30.03.2022
(73) Patentinhaber: Knorr-Bremse Gesellschaft mit beschränkter Haftung, 2340 Mödling (AT)
(72) Erfinder: ZARL, Heinz, 3311 Zeilern (AT); ERNST, Michael, 3331 Hilm (AT); ANGER, Jakob, 3340 Waidhofen/Ybbs (AT)
(74) Vertreter: Wiedemann, Markus
(86) Internationale Anmeldenummer: PCT/EP2020/062954
(87) Internationale Veröffentlichungsnummer: WO 2020/234012

(56) Entgegenhaltungen:
- WO-A1-2017/132762
- GB-A- 2 319 059

## Beschreibung

Die Erfindung betrifft ein Fahrzeug mit einem Chassis, Wagenkasten oder einer Karosserie, welches, welcher oder welche von einer Fahrzeugaußenwand eingefasst ist und mit wenigstens einer Fahrzeug-Türvorrichtung gemäß dem Oberbegriff von Anspruch 1.

Ein Fahrzeug, dort in Form eines Fahrzeugs des öffentlichen Personenverkehrs mit einer Fahrzeug-Türvorrichtung ist beispielsweise aus EP 1 914 372 A1 bekannt. Eine Tragführung der Fahrzeug-Türvorrichtung des Fahrzeugs ist dort im oberen Bereich einer Portalöffnung eines Türportals aufgenommen. Diese Ausführung hat jedoch den Nachteil, dass dadurch die lichte Höhe des Türportals beschränkt wird. Ein gattungsgemäßes Fahrzeug wird in GB 2 319 059 A beschrieben.

Der vorliegenden Erfindung liegt demgegenüber die Aufgabe zugrunde, ein Fahrzeug mit einer Fahrzeug-Türvorrichtung derart weiter zu entwickeln, dass der freie Raum des Fahrzeugs möglichst wenig beschränkt wird.

Dese Aufgabe durch die Merkmale des Anspruchs 1 gelöst.

### Offenbarung der Erfindung

Die Erfindung geht aus von einem Fahrzeug mit einem Chassis, Wagenkasten oder einer Karosserie, welches, welcher oder welche von einer Fahrzeugaußenwand eingefasst ist und mit wenigstens einer Fahrzeug-Türvorrichtung, welche wenigstens Folgendes umfasst: Wenigstens eine Außentüre, welche als Außen-Schiebetüre ausgebildet ist, eine Türöffnung im Chassis, im Wagenkasten oder in der Karosserie, eine elektro-mechanische Antriebseinrichtung, durch welche die wenigstens eine Außentüre zwischen einer die Türöffnung verschließenden Schließstellung und einer die Türöffnung frei gebenden Öffnungsstellung sowie in beliebige Zwischenstellungen zwischen der Schließstellung und der Öffnungsstellung angetrieben ist, eine elektronische Steuerung, welche die elektro-mechanische Antriebseinrichtung steuert oder regelt, eine Türführungseinrichtung, welche die wenigstens eine Außentüre in Bezug zur Türöffnung führt, eine Verriegelungseinrichtung zum Verriegeln der wenigstens einen Außentüre wenigstens in der Schließstellung.

Unter einer Außentüre soll eine Türe verstanden werden, bei welcher sich die Türebene sowohl in der Schließstellung, wie auch in den Zwischenstellungen und in der Öffnungsstellung außerhalb einer gedachten äußeren Konturfläche des Chassis, des Wagenkastens oder der Karosserie befindet, welche die Außenwandung beinhaltet. Dadurch unterscheidet sich eine Außentüre beispielsweise von einer Taschentüre, welche in der Öffnungsstellung in eine in der Außenwandung ausgebildete Türtasche einfährt.

Unter einem Chassis, einem Wagenkasten oder einer Karosserie soll entweder eine selbsttragende Struktur oder eine Struktur verstanden werden, welche von einem Rahmen getragen wird. Zu unterscheiden ist das Chassis, der Wagenkasten oder die Karosserie von einem Fahrwerk des Fahrzeugs, welches z.B. als Räder tragende Achsen oder als Drehgestell mit Radsätzen mit einem zu befahrenden Untergrund, z.B. einer Straße oder einem Gleis in Kontakt steht. Auch zu unterscheiden ist das Chassis, der Wagenkasten oder die Karosserie von einer Federungseinrichtung des Fahrzeugs (z.B. Stahlfederung, Luftfederung), welche in vertikaler Richtung gesehen zwischen den Achsen oder Drehgestellen einerseits und dem Chassis, dem Wagenkasten oder der Karosserie andererseits angeordnet ist.

Weiterhin geht die Erfindung davon aus, dass wenigstens die elektro-mechanische Antriebseinrichtung, die Türführungseinrichtung und die Verriegelungseinrichtung jeweils vollständig an der Fahrzeugaußenwand und von dieser nach außen weisend angeordnet sind. Eine vollständige Anordnung dieser Baugruppen an der Fahrzeugaußenwand und von dieser nach außen weisend bedeutet, dass diese Baugruppen an einer äußeren Fläche der Außenwand angeordnet sind. Dies kann aber einschließen, dass diese Baugruppen und auch weitere Baugruppen, welche vorzugsweise an der Fahrzeugaußenwand und von dieser nach außen weisend angeordnet sind, von einer Abdeckung zum Schutz gegen die Witterung und Nässe wenigstens teilweise abgedeckt sind. Eine solche, beispielsweise an der Fahrzeugaußenwand befestigte Abdeckung soll dann keinen Bestandteil der Fahrzeugaußenwand selbst bilden, sondern lediglich ein Anbauteil der Fahrzeugaußenwand darstellen.

Die Erfindung geht auch davon aus, dass die wenigstens eine Außentüre durch eine Schiebetüre gebildet wird, und dass die Türführung eine Linearführung für die Schiebetüre beinhaltet, und dass die elektro-mechanische Antriebseinrichtung eine Linear-Antriebseinrichtung beinhaltet, welche wenigstens ein eine Spulenreihe aus in Reihe aneinander gereihten Magnetspulen umfassendes und vollständig an der Fahrzeugaußenwand und von dieser nach außen weisend angeordnetes Statormodul und einen wenigstens einen Permanentmagneten umfassendes und mit der wenigstens einen Außentüre verbundenes Läufermodul aufweist, wobei eine magnetische Wechselwirkung zwischen dem wenigstens einen Statormodul und dem wenigstens einen Läufermodul entsteht, wenn die Magnetspulen bestromt werden und infolge der magnetischen Wechselwirkung eine magnetische Kraft als Antriebskraft auf die wenigstens eine Außentüre ausgeübt wird, wobei die elektronische Steuerung als wenigstens ein elektronisches Steuerungsmodul ausgebildet ist.

Erfindungsgemäß ist an der Fahrzeugaußenwand und von dieser nach außen weisend in einer Reihe oder in einer Flucht hintereinander wenigstens Folgendes angeordnet: Das wenigstens eine Statormodul, das wenigstens eine elektronische Steuerungsmodul sowie ein Verriegelungsmodul, in dem die Verriegelungseinrichtung integriert ist.

Die Vorteile der Erfindung liegen darin, dass Bauraum innerhalb des Türportals und auch innerhalb der Fahrzeugaußenwand eingespart wird und dadurch für von der Türvorrichtung abweichende Baugruppen wie beispielsweise eine Klimaanlage, eine Verrohrung oder Verkabelung genutzt werden kann. Weiterhin entfallen dann auch mechanische Verbindungen zwischen außen- und innenliegenden Komponenten insbesondere der Antriebseinrichtung, was eine Montage der Türvorrichtung vereinfacht. In den Unteransprüchen sind vorteilhafte Weiterbildungen der Erfindung angegeben. Vorzugsweise sind in Gebrauchslage der Fahrzeug-Türvorrichtung gesehen die elektro-mechanische Antriebseinrichtung, die Türführungseinrichtung und die Verriegelungseinrichtung oberhalb eines oberen Randes der Türöffnung angeordnet.

Auch kann die Fahrzeug-Türvorrichtung eine Notentriegelungseinrichtung aufweisen, durch welche die wenigstens eine in der Schließstellung verriegelte Außentüre ohne Einwirkung von elektrischem Strom notentriegelbar ist, wobei auch die Notentriegelungseinrichtung an der Fahrzeugaußenwand und von dieser nach außen weisend angeordnet ist. Ausgenommen hiervon kann ein mechanisches Aktivierungselement der Notentriegelungseinrichtung sein, welches sich von der Notentriegelungseinrichtung nach innerhalb des Wagenkastens oder des Chassis erstrecken kann, weil es auch einer Person innerhalb des Wagenkastens oder des Chassis bedient werden können muss.

Bevorzugt sind die Noteinriegelungseinrichtung und die Verriegelungseinrichtung in dem Verriegelungsmodul integriert, welches an der der Fahrzeugaußenwand und von dieser nach außen weisend angeordnet ist. Das Verriegelungsmodul kann gemäß einer Weiterbildung auch eine Türsperre, ein Pushback und/oder eine Unterdrückungseinrichtung für die Notentriegelung umfassen.

Unter einem Modul soll insbesondere eine separate Baueinheit verstanden werden, welche für sich genommen an einer Struktur wie hier beispielsweise der Fahrzeugaußenwand befestigt werden kann. Dabei muss ein solches Modul nicht notwendigerweise ein eigenes Gehäuse aufweisen, obwohl dies auch möglich ist. Gemäß einer Weiterbildung kann die Fahrzeug-Türvorrichtung wenigstens einen Wegsensor umfassen, welcher die Ist-Position der wenigstens einen Außentüre erfasst und ein entsprechendes Wegsignal in die elektronische Steuerung einsteuert, wobei der wenigstens eine Wegsensor an der Fahrzeugaußenwand und von dieser nach außen weisend angeordnet ist. Abhängig von einer vorgegebenen Soll-Position, welche dann beispielsweise durch die Schließstellung oder die Öffnungsstellung oder auch eine beliebige Zwischenstellung gebildet werden kann, kann dann die Ist-Position der wenigstens einen Außentüre auf die Soll-Position eingeregelt werden.

Insbesondere kann die Fahrzeug-Türvorrichtung zwei angetriebene Außen-Schiebetüren umfassen, eine erste Außen-Schiebetüre und eine zweite Außen-Schiebetüre, wobei in Gebrauchslage der Fahrzeug-Türvorrichtung gesehen das Verriegelungsmodul in einer vertikalen Verlängerung einer Stoßlinie zwischen der ersten Außen-Schiebetüre und der zweiten Außen-Schiebetüre angeordnet ist, entlang welcher sich die erste Außen-Schiebetüre und die zweite Außen-Schiebetüre in der Schließstellung direkt oder indirekt berühren, und wobei in Verschieberichtung der beiden Außen-Schiebetüren gesehen an einer ersten Seite des Verriegelungsmoduls wenigstens ein erstes Statormodul an der Fahrzeugaußenwand und von dieser nach außen weisend angeordnet ist, welches mit einem ersten, mit der ersten Schiebetüre verbundenen Läufermodul in magnetische Wechselwirkung bringbar ist, und an einer zweiten, von der ersten Seite wegweisenden zweiten Seite des Verriegelungsmoduls wenigstens ein zweites Statormodul an der Fahrzeugaußenwand und von dieser nach außen weisend angeordnet ist, welches mit einem zweiten, mit der zweiten Außen-Schiebetüre verbundenen Läufermodul in magnetische Wechselwirkung bringbar ist, und wobei mehrere Wegsensoren vorgesehen sind, welche in das wenigstens eine Steuerungsmodul und/oder in wenigstens ein Statormodul integriert sind.

In der oben genannten Reihe oder in der oben genannten Flucht gesehen kann dann beispielsweise ein elektronisches Steuerungsmodul wenigstens zwei Statormodulen zwischengeordnet sein.

Alternativ kann selbstverständlich auch nur eine einzige Schiebe-Außentüre vorgesehen sein, welche dann von der elektronischen Steuerung in die die Türöffnung verschließende Schließstellung oder in die die Türöffnung freigebende Öffnungsstellung sowie in Zwischenstellungen zwischen der Schließstellung und der Öffnungsstellung gesteuert werden kann.

Bevorzugt stellt das oben beschriebene Fahrzeug ein Schienenfahrzeug dar, insbesondere eine S- oder U-Bahnfahrzeug oder auch einen Reisezugwagen wie auch ein Triebschienenfahrzeug. Alternativ kann es auch ein Straßenfahrzeug sein, insbesondere ein Nutzfahrzeug, ein Omnibus oder ein Fahrzeug zur Personenbeförderung.

### Zeichnung

Nachstehend ist ein Ausführungsbeispiel der Erfindung in der Zeichnung dargestellt und in der nachfolgenden Beschreibung näher erläutert. In der Zeichnung zeigt
- Fig. 1: eine perspektivische Ansicht eines Stators eines Linearantriebs einer doppelflügeligen Schiebetüreinrichtung eines Schienenfahrzeugs als bevorzugte Ausführungsform der Erfindung;
- Fig. 2: eine Querschnittsansicht entlang der Linie II - II von Fig.1;

### Beschreibung des Ausführungsbeispiels

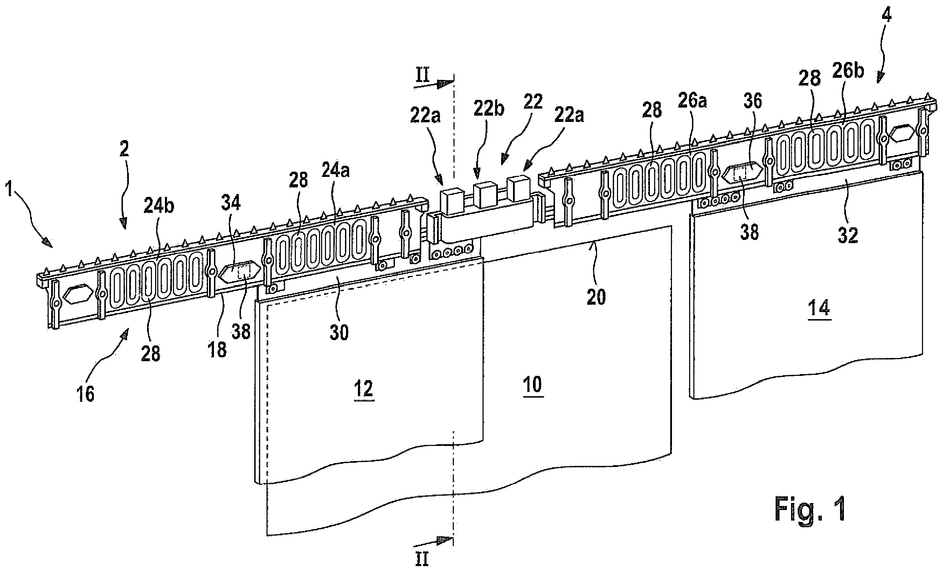

In **Fig. 1** stellt eine perspektivische Ansicht eines Stators 1 einer Linear-Antriebseinrichtung 2 einer doppelflügeligen Türvorrichtung 4 eines Schienenfahrzeugs als bevorzugte Ausführungsform eines Fahrzeugs der Erfindung dar. Die Ansichtsrichtung von **Fig. 1** ist dabei vom Inneren des Schienenfahrzeugs aus.

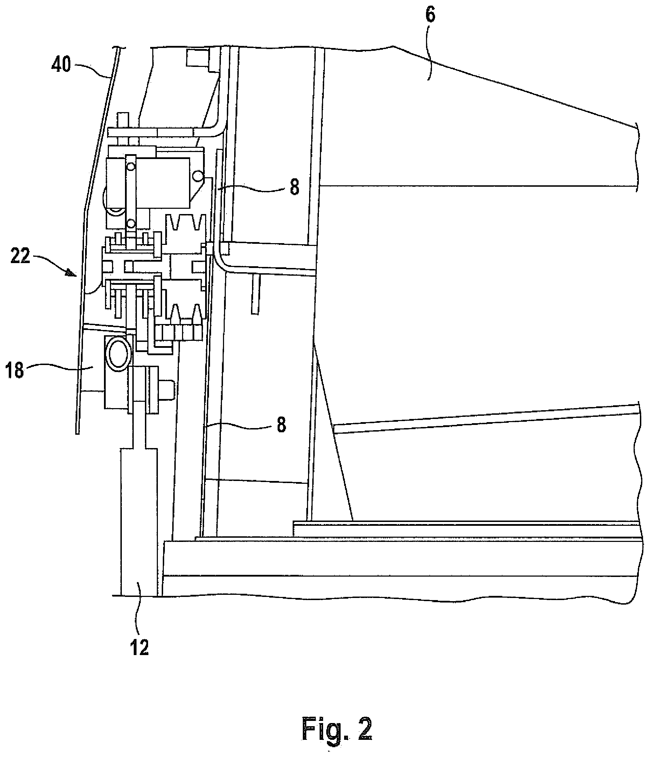

Wie am besten anhand von **Fig. 2** zu sehen ist, weist das Schienenfahrzeug einen Wagenkasten 6 auf, welcher von einer Fahrzeugaußenwand 8 eingefasst ist. In dem Wagenkasten 6 sind mehrere Türöffnungen 10 als Durchgangsöffnungen ausgebildet, welche hier beispielsweise ein Ein- und Aussteigen von Passagieren in das Schienenfahrzeug bzw. aus diesem ermöglichen. Beispielhaft ist in **Fig. 1** eine solche Türöffnung 10 gezeigt.

Die Türvorrichtung umfasst hier beispielsweise zwei von der Linear-Antriebseinrichtung 2 antreibbare Außen-Schiebetüren, eine erste Außen-Schiebetüre 12 und eine zweite Außen-Schiebetüre 14. Die elektro-mechanische Antriebseinrichtung beinhaltet eine Linear-Antriebseinrichtung, durch welche die Außen-Schiebetüren 12, 14 zwischen einer die Türöffnung 10 verschließenden Schließstellung und einer die Türöffnung 10 frei gebenden Öffnungsstellung sowie in beliebige Zwischenstellungen zwischen der Schließstellung und der Öffnungsstellung angetrieben sind. Aus Anschaulichkeitsgründen sind in **Fig. 1** die erste Außen-Schiebetüre 12 in der Schließstellung und die zweite Außen-Schiebetüre 14 in der Öffnungsstellung gezeigt. Eine solche Konstellation ist durch den Antrieb mittels der Linear-Antriebseinrichtung möglich, weil bei dieser keine mechanische Kopplung des Türantriebs der beiden Außen-Schiebetüren 12, 14 vorhanden ist und die beiden Außen-Schiebetüren 12, 14 elektrisch getrennt voneinander angetrieben werden können. In der Regel werden die beiden Außen-Schiebetüren 12, 14 aber elektrisch synchron angetrieben, d.h. sie bewegen sich zusammen jeweils in die jeweilige Öffnungs- oder Schließstellung.

Eine Türführungseinrichtung 16 der Türvorrichtung 4 dient zur Führung der beiden Außen-Schiebetüren 12, 14 gegenüber dem Wagenkasten 6 oder gegenüber dessen Türöffnung 10. Die Türführungseinrichtung 16 ist hier insbesondere als Linearführung und insbesondere als Rollenführungseinrichtung ausgebildet, wobei die beiden Außen-Schiebetüren 12, 14 durch Rollen an einer Führungsschiene 18 entlang einer Verschieberichtung linear geführt werden. Die Führungsschiene 18 ist hier an der Fahrzeugaußenwand angeordnet bzw. dort befestigt. Insbesondere ist die Führungsschiene 18 oberhalb eines oberen Randes 20 der Türöffnung 10 angeordnet und ist insbesondere parallel zu diesem oberen Rand 20.

Weiterhin umfasst die Türvorrichtung 4 auch ein Verriegelungsmodul 22 zum Verriegeln der beiden Außen-Schiebetüren 12, 14 in der Schließstellung, in welcher sich die beiden Außen-Schiebetüren 12, 14 mit ihren zueinander weisenden Vertikalrändern mittig kontaktieren. Das Verriegelungsmodul 22 ist beispielsweise in einer vertikalen Verlängerung einer Stoßlinie zwischen der ersten Außen-Schiebetüre 12 und der zweiten Außen-Schiebetüre 14 angeordnet, entlang welcher sich die erste Außen-Schiebetüre 12 und die zweite Außen-Schiebetüre 14 in der Schließstellung mit ihren zueinander weisenden Vertikalrändern berühren. Das Verriegelungsmodul 22 ist ebenfalls vollständig an der Fahrzeugaußenwand 8 und von dieser nach außen weisend angeordnet.

Die Linear-Antriebseinrichtung 2 umfasst hier mehrere Statormodule 24a, 24b und 26a, 26b, welche jeweils eine Spulenreihe aus in Reihe aneinander gereihten Magnetspulen 28 beinhalten. Die Reihe der Magnetspulen 28 ist parallel in Bezug auf die Verschieberichtung der beiden Außen-Schiebetüren 12, 14 sowie auch parallel zu den horizontalen Rändern der Türöffnung 10, wobei die Statormodule 24a, 24b und 26a, 26b in Gebrauchslage der Türvorrichtung 10 ebenfalls oberhalb des oberen Randes 20 der Türöffnung 10 angeordnet sind. Die Statormodule 24a, 24b und 26a, 26b sind weiterhin ebenfalls vollständig an der Fahrzeugaußenwand 8 und von dieser nach außen weisend angeordnet.

Weiterhin beinhaltet die Linear-Antriebseinrichtung 2 hier beispielsweise zwei jeweils mehrere Permanentmagneten umfassende Läufermodule, wobei ein erstes Läufermodul 30 mit der ersten Außen-Schiebetüre 12 und ein zweites Läufermodul 32 mit der zweiten Außen-Schiebetüre 14 verbunden ist. Diese Läufermodule 30, 32 sind in der Ansicht gemäß **Fig. 1** nur teilweise sichtbar, weil sie dort von den Statormodulen 24a, 24b und 26a, 26b überdeckt werden.

In bekannter Weise entsteht eine magnetische Wechselwirkung zwischen den Statormodulen 24a, 24b und 26a, 26b und den Läufermodulen 30, 32, wenn die Magnetspulen 28 der Statormodulen 24a, 24b und 26a, 26b bestromt werden und dann infolge der magnetischen Wechselwirkung eine magnetische Kraft als Antriebskraft auf das erste Läufermodul und damit auf die erste Außen-Schiebetüre 12 bzw. auf das zweite Läufermodul 32 und damit auf die zweite Außen-Schiebetüre 14 ausgeübt wird.

insbesondere sind beispielsweise zwei (in **Fig. 1** linke) erste Statormodule 24a, 24b vorgesehen, welche abhängig von ihrer Bestromung/Entstromung Einfluss auf die Bewegung der ersten Außen-Schiebetüre 12 nehmen, sowie beispielsweise zwei (in **Fig. 1** rechte) zweite Statormodule 26a, 26b, welche abhängig von ihrer Bestromung/Entstromung Einfluss auf die Bewegung der zweiten Außen-Schiebetüre 14 nehmen. Alle ersten und zweiten Statormodule 24a, 24b und 26a, 26b sind ebenfalls vollständig an der Fahrzeugaußenwand 8 und von dieser nach außen weisend sowie beispielsweise in einer Reihe parallel zum oberen Rand 20 der Türöffnung 10 und oberhalb von diesem angeordnet.

Weiterhin umfasst die Türvorrichtung 4 auch eine elektronische Steuerung, welche die Linear-Antriebseinrichtung 2 steuert oder regelt. Die elektronische Steuerung ist hier beispielsweise in zwei Steuerungsmodule aufgeteilt, wobei ein erstes Steuerungsmodul 34 die beiden ersten Statormodule 24a, 24b und ein zweites Steuerungsmodul 36 die beiden zweiten Statormodule 26a, 26b bedarfsweise bestromt oder entströmt, so dass das erste Steuerungsmodul 34 die Bewegung der ersten Außen-Schiebetüre 12 steuert oder regelt und das zweite Steuerungsmodul 36 die Bewegung der zweiten Außen-Schiebetüre 14. Vorzugsweise sind hier sämtliche Steuer- und Regelroutinen in das erste Steuermodul 34 und das zweite Steuerungsmodul 36 integriert, durch welche dann die Stelllungen der beiden Außen-Schiebetüren 12, 14 insbesondere getrennt gesteuert oder geregelt werden können, aber eben insbesondere auch in synchroner Weise.

Im hier vorliegenden Ausführungsbeispiel ist in Verschieberichtung der beiden Außen-Schiebetüren 12, 14 gesehen das erste Steuerungsmodul 34 den beiden ersten Statormodulen 24a, 24b und das zweite Steuerungsmodul 36 den beiden zweiten Statormodulen 26a, 26b zwischengeordnet, wobei die Statormodule 24a, 24b, 26a, 26b und die Steuerungsmodule 34, 36 wiederum in einer Reihe angeordnet sind. Weiterhin sind auch die beiden Steuerungsmodule 34, 36 an der Fahrzeugaußenwand 8 und von dieser nach außen weisend angeordnet.

Die Türvorrichtung 4 umfasst auch mehrere Wegsensoren 38, die jeweils die Ist-Position der beiden Außen-Schiebetüren 12, 14 erfassen und entsprechende Wegsignale in die beiden Steuerungsmodule 34, 36 einsteuern. Hier sind die Wegsensoren 38 beispielsweise in den Steuerungsmodulen 34, 36 und/oder in den Statormodulen 24a, 24b, 26a, 26b integriert, welche an der Fahrzeugaußenwand 8 und von dieser nach außen weisend angeordnet sind. Abhängig von einer vorgegebenen Soll-Position, welche dann beispielsweise durch die Schließstellung oder die Öffnungsstellung oder auch eine beliebige Zwischenstellung gebildet werden kann, kann dann die Ist-Position jeder der beiden Außen-Schiebetüren 12, 14 in einem Closed Loop auf die Soll-Position eingeregelt werden.

Folglich sind an der Fahrzeugaußenwand 8 und von dieser nach außen weisend in einer Reihe oder in einer Flucht hintereinander die Statormodule 24a, 24b, 26a, 26b, die Steuerungsmodule 34, 36 sowie das Verriegelungsmodul 22 angeordnet.

Die Türvorrichtung 4 weist hier auch eine Notentriegelungseinrichtung 22b auf, durch welche die in der Schließstellung verriegelten Außen-Schiebetüren 12, 14 ohne Einwirkung von elektrischem Strom notentriegelbar sind. Bevorzugt sind die Noteinriegelungseinrichtung 22b und die Verriegelungseinrichtung 22a zusammen in dem Verriegelungsmodul 22 integriert, welches an der der Fahrzeugaußenwand 8 und dieser nach außen weisend angeordnet ist. Das Verriegelungsmodul 22 kann auch eine Türsperre, ein Pushback und/oder eine Unterdrückungseinrichtung für die Notentriegelung umfassen.

Die in einer Reihe oder in einer Flucht hintereinander angeordneten Statormodule 24a, 24b, 26a, 26b, Steuerungsmodule 34, 36 sowie das Verriegelungsmodul 22 können dann zum Schutz vor Beschädigung und Witterung durch ein Abdeckblech 40 abgedeckt sein **(****Fig. 2****),** welches dann beispielsweise ebenfalls an der Fahrzeugaußenwand 8 und von dieser nach außen weisend befestigt ist.

### BEZUGSZEICHENLISTE

- 1: Stator
- 2: Linear-Antriebseinrichtung
- 4: Türvorrichtung
- 6: Wagenkasten
- 8: Fahrzeugaußenwand
- 10: Türöffnung
- 12: erste Außen-Schiebetüre
- 14: zweite Außen-Schiebetüre
- 16: Türführungseinrichtung
- 18: Führungsschiene
- 20: oberer Rand
- 22: Verriegelungsmodul
- 22a: Verriegelungseinrichtung
- 22b: Notentriegelungseinrichtung
- 24a/b: erste Statormodule
- 26a/b: zweite Statormodule
- 28: Magnetspulen
- 30: erstes Läufermodul
- 32: zweites Läufermodul
- 34: erstes Steuerungsmodul
- 36: zweites Steuerungsmodul
- 38: Wegsensoren
- 40: Abdeckblech

## Patentansprüche

1. Fahrzeug mit einem Chassis, Wagenkasten (6) oder einer Karosserie, welches, welcher oder welche von einer Fahrzeugaußenwand (8) eingefasst ist und mit wenigstens einer Fahrzeug-Türvorrichtung (4), welche wenigstens Folgendes umfasst:
a) Wenigstens eine Außentüre (12, 14),
b) eine Türöffnung (10) im Chassis, im Wagenkasten (6) oder in der Karosserie,
c) eine elektro-mechanische Antriebseinrichtung (2), durch welche die wenigstens eine Außentüre (12, 14) zwischen einer die Türöffnung (10) verschließenden Schließstellung und einer die Türöffnung (10) frei gebenden Öffnungsstellung sowie in beliebige Zwischenstellungen zwischen der Schließstellung und der Öffnungsstellung angetrieben ist,
d) eine elektronische Steuerung (34, 36), welche die elektro-mechanische Antriebseinrichtung (2) steuert oder regelt,
e) eine Türführungseinrichtung (16), welche die wenigstens eine Außentüre (12, 14) gegenüber der Türöffnung (10) führt,
f) eine Verriegelungseinrichtung (22a), die in einem Verriegelungsmodul (22) integriert ist und welche die wenigstens eine Außentüre (12, 14) wenigstens in der Schließstellung verriegelt, wobei
g) wenigstens die elektro-mechanische Antriebseinrichtung (2), die Türführungseinrichtung (16) und die Verriegelungseinrichtung (22a) jeweils vollständig an der Fahrzeugaußenwand (8) und von dieser nach außen weisend angeordnet sind, und wobei
h) die wenigstens eine Außentüre (12, 14) durch eine Außen-Schiebetüre gebildet wird, und dass
i) die Türführungseinrichtung (16) eine Linearführung für die Schiebetüre beinhaltet, und dass
j) die elektro-mechanische Antriebseinrichtung (2) eine Linear-Antriebseinrichtung beinhaltet, welche wenigstens eine Spulenreihe aus in Reihe aneinander gereihten Magnetspulen (28) umfassendes und vollständig an der Fahrzeugaußenwand (8) und nach außen weisend angeordnetes Statormodul (24a, 24b, 26a, 26b) und einen wenigstens einen Permanentmagneten umfassendes und mit der wenigstens einen Außentüre (12, 14) verbundenes Läufermodul (30, 32) aufweist, wobei eine magnetische Wechselwirkung zwischen dem wenigstens einen Statormodul (24a, 24b, 26a, 26b) und dem wenigstens einen Läufermodul (30, 32) entsteht, wenn die Magnetspulen (28) bestromt werden und infolge der magnetischen Wechselwirkung eine magnetische Kraft als Antriebskraft auf die wenigstens eine Außentüre (12, 14) ausgeübt wird, wobei
k) die elektronische Steuerung (34, 36) als wenigstens ein elektronisches Steuerungsmodul ausgebildet ist, **dadurch gekennzeichnet, dass**
l) an der Fahrzeugaußenwand (8) und von dieser nach außen weisend in einer Reihe oder in einer Flucht hintereinander wenigstens Folgendes angeordnet ist: Das wenigstens eine Statormodul (24a, 24b, 26a, 26b), das wenigstens eine elektronische Steuerungsmodul (34, 36) sowie das Verriegelungsmodul (22).

2. Fahrzeug nach Anspruch 1, **dadurch gekennzeichnet, dass** in Gebrauchslage der Fahrzeug-Türvorrichtung (4) gesehen die elektro-mechanische Antriebseinrichtung (2), die Türführungseinrichtung (16) und die Verriegelungseinrichtung (22a) oberhalb eines oberen Randes (20) der Türöffnung (10) angeordnet sind.

3. Fahrzeug nach einem der vorhergehenden Ansprüche, **dadurch gekennzeichnet, dass** die Fahrzeug-Türvorrichtung (4) eine Notentriegelungseinrichtung (22b) aufweist, durch welche die wenigstens eine in der Schließstellung verriegelte Außentüre (12, 14) ohne Einwirkung von elektrischem Strom notentriegelbar ist, wobei auch die Notentriegelungseinrichtung (22b) an der Fahrzeugaußenwand (8) und von dieser nach außen weisend angeordnet ist.

4. Fahrzeug nach Anspruch 3, **dadurch gekennzeichnet, dass** die Noteinriegelungseinrichtung (22b) und die Verriegelungseinrichtung (22a) in einem Verriegelungsmodul (22) integriert sind, welches an der Fahrzeugaußenwand (8) und von dieser nach außen weisend angeordnet ist.

5. Fahrzeug nach Anspruch 4, **dadurch gekennzeichnet, dass** die Fahrzeug-Türvorrichtung (4) wenigstens einen Wegsensor (38) umfasst, welcher die Ist-Position der wenigstens einen Außentüre (12, 14) erfasst und ein entsprechendes Wegsignal in die elektronische Steuerung (34, 36) einsteuert, wobei der wenigstens eine Wegsensor (38) an der Fahrzeugaußenwand (8) und von dieser nach außen weisend angeordnet ist.

6. Fahrzeug nach einem der vorhergehenden Ansprüche, **dadurch gekennzeichnet, dass** es durch ein Schienenfahrzeug gebildet wird.

## Claims

1. Vehicle having a chassis, a vehicle body (6) or a body, which is enclosed by a vehicle outer wall (8) and having at least one vehicle door device (4) which includes at least the following:
a) at least one outer door (12, 14),
b) a door opening (10) in the chassis, in the vehicle body (6) or in the body,
c) an electromechanical drive apparatus (2) by means of which the at least one outer door (12, 14) is driven between a closed position closing the door opening (10) and an open position exposing the door opening (10), as well as into any interim positions between the closed position and the open position,
d) an electronic control (34, 36) which controls or regulates the electromechanical drive apparatus (2),
e) a door guiding apparatus (16) which guides the at least one outer door (12, 14) with respect to the door opening (10),
f) a locking apparatus (22a) which is integrated in a locking module (22) and which locks the at least one outer door (12, 14) at least in the closed position, wherein
g) at least the electromechanical drive apparatus (2), the door guiding apparatus (16) and the locking apparatus (22a) are arranged respectively completely at the vehicle outer wall (8) and pointing therefrom to the outside, and wherein
h) the at least one outer door (12, 14) is formed by an outer sliding door, and that
i) the door guiding apparatus (16) contains a linear guide for the sliding door, and that
j) the electromechanical drive apparatus (2) includes a linear drive apparatus which has a stator module (24a, 24b, 26a, 26b) comprising at least one coil series constituting magnetic coils lined up in a row next to one another and arranged completely at the vehicle outer wall (8) and pointing to the outside, and a rotor module (30, 32) comprising at least one permanent magnet and connected to the at least one outer door (12, 14), wherein a magnetic interaction between the at least one stator module (24a, 24b, 26a, 26b) and the at least one rotor module (30, 32) results when the magnetic coils (28) are electrified and as a result of the magnetic interaction a magnetic force is exerted as a drive force onto the at least one outer door (12, 14), wherein
k) the electronic control (34, 36) is configured as at least one electronic control module, **characterised in that**
l) at the vehicle outer wall (8) and pointing to the outside in a row or flush behind one another is arranged at least the following: the at least one stator module (24a, 24b, 26a, 26b), the at least one electronic control module (34, 36) and the locking module (22).

2. Vehicle according to claim 1, **characterised in that** viewed in the use position of the vehicle door device (4) the electromechanical drive apparatus (2), the door guiding apparatus (16) and the locking apparatus (22a) are arranged above an upper edge (20) of the door opening (10).

3. Vehicle according to any of the preceding claims, **characterised in that** the vehicle door device (4) has an emergency unlocking apparatus (22b) by means of which the at least one outer door (12, 14) locked in the closed position can be unlocked in an emergency without using electricity, wherein also the emergency unlocking apparatus (22b) is arranged at the vehicle outer wall (8) and pointing to the outside therefrom.

4. Vehicle according to claim 3, **characterised in that** the emergency unlocking apparatus (22b) and the locking apparatus (22a) are integrated in a locking module (22) which is arranged at the vehicle outer wall (8) and pointing to the outside therefrom.

5. Vehicle according to claim 4, **characterised in that** the vehicle door device (4) includes at least one displacement sensor (38) which detects the actual position of the at least one outer door (12, 14) and feeds an appropriate displacement signal into the electronic control (34, 36), wherein the at least one displacement sensor (38) is arranged at the vehicle outer wall (8) and pointing to the outside therefrom.

6. Vehicle according to any of the preceding claims, **characterised in that** it is constituted by a rail vehicle.

## Revendications

1. Véhicule avec un châssis, une caisse de véhicule (6) ou une carrosserie lequel ou laquelle est encadré(e) par une paroi extérieure de véhicule (8) et avec au moins un dispositif de porte de véhicule (4) qui comprend au moins ce qui suit :
a) au moins une porte extérieure (12, 14),
b) une ouverture de porte (10) dans le châssis, dans la caisse de véhicule (6) ou dans la carrosserie,
c) un appareil d'entraînement électromécanique (2), par lequel l'au moins une porte extérieure (12, 14) est entraînée entre une position de fermeture fermant l'ouverture de porte (10) et une position d'ouverture libérant l'ouverture de porte (10) ainsi que dans des positions intermédiaires quelconques entre la position de fermeture et la position d'ouverture,
d) un dispositif de commande électronique (34, 36) qui commande ou régule l'appareil d'entraînement électromécanique (2),
e) un appareil de guidage de porte (16) qui guide l'au moins une porte extérieure (12, 14) par rapport à l'ouverture de porte (10),
f) un appareil de verrouillage (22a), qui est intégré dans un module de verrouillage (22) et qui verrouille l'au moins une porte extérieure (12, 14) au moins dans la position de fermeture, dans lequel
g) au moins l'appareil d'entraînement électromécanique (2), l'appareil de guidage de porte (16) et l'appareil de verrouillage (22a) sont respectivement disposés entièrement sur la paroi extérieure de véhicule (8) et pointant vers l'extérieur à partir de celle-ci, et dans lequel
h) l'au moins une porte extérieure (12, 14) est formée par une porte coulissante extérieure, et en ce que
i) l'appareil de guidage de porte (16) contient un guidage linéaire pour la porte coulissante, et en ce que
j) l'appareil d'entraînement électromécanique (2) contient un appareil d'entraînement linéaire qui présente un module de stator (24a, 24b, 26a, 26b) comprenant au moins une rangée de bobines de bobines magnétiques (28) alignées les unes à côté des autres en série et disposé entièrement sur la paroi extérieure de véhicule (8) et pointant vers l'extérieur et un module de rotor (30, 32) comprenant au moins un aimant permanent et connecté à l'au moins une porte extérieure (12, 14), dans lequel une interaction magnétique se produit entre l'au moins un module de stator (24a, 24b, 26a, 26b) et l'au moins un module de rotor (30, 32) lorsque les bobines magnétiques (28) sont alimentées et, à la suite de l'interaction magnétique, une force magnétique est exercée en tant que force d'entraînement sur l'au moins une porte extérieure (12, 14), dans lequel
k) le dispostif de commande (34, 36) est conçu en tant qu'au moins un module de commande électronique, **caractérisé en ce que**
l) au moins ce qui suit est disposé sur la paroi extérieure de véhicule (8) et pointant vers l'extérieur à partir de celle-ci en une rangée ou en alignement les uns derrière les autres : l'au moins un module de stator (24a, 24b, 26a, 26b), l'au moins un module de commande électronique (34, 36) ainsi que le module de verrouillage (22).

2. Véhicule selon la revendication 1, **caractérisé en ce que,** vu en position d'utilisation du dispositif de porte de véhicule (4), l'appareil d'entraînement électromécanique (2), l'appareil de guidage de porte (16) et l'appareil de verrouillage (22a) sont disposés au-dessus d'un bord supérieur (20) de l'ouverture de porte (10).

3. Véhicule selon l'une quelconque des revendications précédentes, **caractérisé en ce que** le dispositif de porte de véhicule (4) présente un appareil de déverrouillage d'urgence (22b) par lequel l'au moins une porte extérieure (12, 14) verrouillée en position de fermeture peut être déverrouillée d'urgence sans utiliser de courant électrique, dans lequel l'appareil de déverrouillage d'urgence (22b) est également disposé sur la paroi extérieure de véhicule (8) et pointant vers l'extérieur à partir de celle-ci.

4. Véhicule selon la revendication 3, **caractérisé en ce que** l'appareil de déverrouillage d'urgence (22b) et l'appareil de verrouillage (22a) sont intégrés dans un module de verrouillage (22) qui est disposé sur la paroi extérieure de véhicule (8) et pointant vers l'extérieur à partir de celle-ci.

5. Véhicule selon la revendication 4, **caractérisé en ce que** le dispositif de porte de véhicule (4) comprend au moins un capteur de déplacement (38) qui détecte la position réelle de l'au moins une porte extérieure (12, 14) et transmet un signal de déplacement correspondant au dispositif de commande électronique (34, 36), dans lequel l'au moins un capteur de déplacement (38) est disposé sur la paroi extérieure de véhicule (8) et pointant vers l'extérieur à partir de celle-ci.

6. Véhicule selon l'une quelconque des revendications précédentes, **caractérisé en ce qu'**il est formé par un véhicule ferroviaire.
